# EUROPÄISCHE PATENTSCHRIFT

(11) **EP 2 551 173 B1**
(45) Veröffentlichungstag und Bekanntmachung des Hinweises auf die Patenterteilung: **11.03.2015**
(21) Anmeldenummer: 11006289.0
(22) Anmeldetag: 29.07.2011
(51) Int. Cl.: B62D 27/06, B62D 59/04, F16B 2/10

(54) **Befestigungsvorrichting für einen Rangierantrieb**
Fixing device for a ranging drive
Dispositif de fixation pour un entraînement de rangement

(43) Veröffentlichungstag der Anmeldung: 30.01.2013
(73) Patentinhaber: Truma Gerätetechnik GmbH & Co. KG, 85640 Putzbrunn (DE)
(72) Erfinder: Achatz, Dieter, 81679 München (DE); Möhring, Mario, 85408 Gammelsdorf (DE); Mini, Uwe, 85625 Glonn (DE); Schaurer, Oliver, 85445 Oberding (DE); Frank, Andreas, 83052 Bruckmühl (DE); Müller, Jörg, 85658 Egmating (DE)
(74) Vertreter: Prinz & Partner mbB

(56) Entgegenhaltungen:
- EP-A1- 1 764 274
- DE-U1- 20 217 451
- DE-U1-202009 005 524

## Beschreibung

Die Erfindung betrifft eine Befestigungsvorrichtung zum Befestigen eines Querträgers, insbesondere eines einen Rangierantrieb haltenden Querträgers an dem Chassis eines Anhängers.

Es sind Rangierantriebe bekannt, mit denen sehr komfortabel auch größere Anhänger, insbesondere Wohnwagen, auch dann bewegt werden können, wenn die Wohnwagen nicht in der üblichen Weise von einem Zugfahrzeug manövriert werden. Ein derartiger Rangierantrieb weist häufig eine von einem Träger gehaltene Antriebsrolle auf, wobei der Träger zusammen mit der Antriebsrolle wahlweise zwischen einer Ruhestellung, in der die Antriebsrolle von dem zugeordneten Fahrzeugrad entfernt ist, und einer Antriebsposition, in der die Antriebsrolle gegen die Lauffläche des Fahrzeugrads bedrückt wird, bewegbar ist. Auf dem Träger ist zudem ein Antriebsmotor vorgesehen, um die Antriebsrolle drehend anzutreiben. Mit Hilfe von zwei derartigen Rangierantrieben, die an gegenüberliegenden Rädern eines Wohnwagens angeordnet sind, kann der Wohnwagen, zum Beispiel mit Hilfe einer Art Panzersteuerung, sehr präzise und einfach bewegt werden.

Derartige Rangierantriebe sind zum Beispiel aus den EP 1 714 858 A1 und EP 1 714 859 A1 bekannt.

Der Rangierantrieb muss in zuverlässiger und sicherer bzw. robuster Weise an der Unterseite des Wohnwagenchassis befestigt werden. Dabei ist zu berücksichtigen, dass der Rangierantrieb im Ruhezustand auch längere Autofahrten absolvieren muss, ohne sich zu lösen. Im Arbeitsbetrieb muss der Rangierantrieb die Kräfte aufnehmen, die zum Bewegen des mitunter sehr schweren Wohnwagens erforderlich sind.

In der Praxis hat sich eine Befestigungsweise bewährt, bei der unter dem Wohnwagenchassis ein durchgehender Querträger, zum Beispiel in Form eines Vierkantrohrs, an dem Chassis befestigt wird. An den Enden des Querträgers kann jeweils eine Halterung eines jeweiligen Rangierantriebs aufgeschoben und befestigt werden. Die Halterung wiederum bildet die Basis, relativ zu der der die Antriebsrolle haltende Träger hin- und herbewegt wird.

Die Befestigung des Querträgers an dem Chassis ist aufwändig, da eine robuste Konstruktion erforderlich ist, um den Träger auch über einen längeren Zeitraum zuverlässig an dem Chassis zu halten. Die Befestigung erfolgt meist mit Hilfe von Klemmdübeln oder Klemmplatten sowie zahlreichen Schraubverbindungen, die von dem Monteur zu befestigen sind. Die Montagearbeiten erfordern zudem ein präzises Ausrichten der oft schweren Komponenten, sodass meist wenigstens zwei Monteure für die Montagearbeiten erforderlich sind.

Der Erfindung liegt die Aufgabe zugrunde, eine Befestigungsvorrichtung anzugeben, mit deren Hilfe die Montage eines Querträgers an dem Chassis eines Anhängers einfacher vonstatten geht, sodass sie problemlos auch nur von einem Monteur in deutlich kürzerer Arbeitszeit bewältigt werden kann.

Die Aufgabe wird erfindungsgemäß durch eine Befestigungsvorrichtung mit den Merkmalen von Anspruch 1 gelöst. Vorteilhafte Ausgestaltungen sind in den abhängigen Ansprüchen angegeben.

Eine Befestigungsvorrichtung zum Befestigen von wenigstens einem Querträger, insbesondere von einem zum Tragen eines Rangierantriebs vorgesehenen Querträger an der Unterseite eines Anhänger- bzw. Wohnwagenchassis, weist eine Trägeraufnahme zum Aufnehmen eines Querträgers sowie eine relativ zu der Trägeraufnahme um eine Schwenkachse verschwenkbar gelagerte Hebeleinrichtung auf. An einem Ende der Hebeleinrichtung ist eine Spannkraft-Erzeugungseinrichtung vorgesehen, während an dem gegenüberliegenden anderen Ende der Hebeleinrichtung ein Druckelement vorgesehen ist. Durch die Spannkraft-Erzeugungseinrichtung kann eine Kraft, insbesondere eine Zug- oder Druckkraft, zwischen dem zugehörigen Ende der Hebeleinrichtung und der Trägeraufnahme erzeugt werden, der Art, dass sich dieses Ende von der Trägeraufnahme weg bewegt, während sich gleichzeitig das gegenüberliegende andere Ende der Hebeleinrichtung mit dem Druckelement zu der Trägeraufnahme hin bewegt.

Bei einem Verschwenken der Hebeleinrichtung um die Schwenkachse sind somit die Enden der Hebeleinrichtung jeweils zu oder weg von der Trägeraufnahme bewegbar.

Der Querträger als solches stellt nicht einen Bestandteil der Befestigungsvorrichtung dar. Vielmehr kann die Befestigungsvorrichtung wie eine Klammer an den Querträger angesetzt werden bzw. diesen in der Trägeraufnahme aufnehmen. Die Befestigungsvorrichtung dient somit zum Befestigen des Querträgers an einem Halterungselement, welches zum Beispiel das Chassis eines Anhängers bzw. Wohnwagens bzw. eine Komponente des Chassis eines Wohnwagens, wie z.B. ein Längsträger sein kann. Somit dient die Befestigungsvorrichtung dazu, den Querträger an dem Chassis zu befestigen.

Mit Hilfe der Befestigungsvorrichtung können einer oder mehrere Querträger gleichzeitig an dem Halterungselement und damit an einem Chassis befestigt werden. Insbesondere können durch die Befestigungsvorrichtung auch zwei Querträger gemeinsam gehalten werden, wobei jeder Querträger eine ihm zugeordnete Hebeleinrichtung mit entsprechender Spannkraft-Erzeugungseinrichtung aufweisen sollte.

Die Spannkraft-Erzeugungseinrichtung ist in der Lage, eine Druckkraft zu erzeugen, die auf ein Ende der Hebeleinrichtung wirkt. Die Druckkraft kann sich an der Trägeraufnahme, aber auch an dem in die Trägeraufnahme eingelegten Querträger (und damit letztendlich auch wieder an der Trägeraufnahme) abstützen, um die Druckkraft zu erzeugen.

Die Druckkraft bewirkt, dass das gegenüberliegende andere Ende der Hebeleinrichtung in Richtung der Trägeraufnahme bewegt wird, sodass sich das dort angeordnete Druckelement ebenfalls verlagert. Das Druckelement kann wie eine Spannpratze bzw. ein Spannbacken wirken und so die zwischen dem Druckelement und der Trägeraufnahme angeordneten Komponenten festklemmen. Da in der Trägeraufnahme bereits der Querträger eingelegt sein soll, genügt es, wenn zusätzlich noch zwischen dem Querträger und dem Druckelement der Teil des Chassis positioniert wird, an dem das Druckelement festgeklemmt werden soll. Üblicherweise wird das Chassis eines Wohnwagens mit Hilfe von U-Profilen aufgebaut, sodass ein betreffender Teil des U-Profils zwischen dem Druckelement und dem Querträger festgeklemmt werden kann.

Somit ist es für den Monteur nicht mehr erforderlich, zahlreiche Komponenten mit mehreren Schraubverbindungen zu befestigen, um den Querträger an dem Chassis zu fixieren. Vielmehr genügt es, wenn der Monteur den sich zum Beispiel quer an der Unterseite des Wohnwagens erstreckenden Querträger in zwei entsprechende Befestigungsvorrichtungen bzw. deren Trägeraufnahmen einlegt (wenn zwei Rangierantriebe montiert werden sollen). Nachfolgend müssen die Trägeraufnahmen mit dem Druckelement nur noch positioniert und in dem entsprechenden Ausläufer des zum Beispiel als Halterungselement dienenden U-Profils eingehängt werden. Durch Betätigen der Spannkraft-Erzeugungseinrichtung, deren genaue Funktionsweise später noch erläutert wird, kann die notwendige Druckkraft erzeugt werden, die das Druckelement in Richtung der Trägeraufnahme bewegt und so das Chassis und den Querträger miteinander verklemmt.

Zwischen dem Druckelement und der Trägeraufnahme können somit der Querträger und das Halterungselement, zum Beispiel der betreffende Teil des Chassis, angeordnet werden, wobei der Querträger und das Halterungselement durch das Druckelement und die Trägeraufnahme zusammendrückbar sind, also zusammengehalten werden. Bei einer Variante können auch die Trägeraufnahme und das Halterungselement durch das Druckelement und die Trägeraufnahme zusammengedrückt werden. In diesem Fall berührt der Querträger das Halterungselement nicht oder nur leicht.

Die Trägeraufnahme kann zum Beispiel als nach oben geöffnetes U-förmiges Profilteil gebildet sein. Die U-Profilform bildet eine Art "Bett" bzw. Auflage, auf die der Querträger aufgelegt werden kann, während seine Seitenwände durch die Flanken des U-Profils geführt werden.

In einem Bereich der Trägeraufnahme, der bei bestimmungsgemäßer Montage an dem Halterungselement anliegen soll, können die Flanken des U-Profils an ihrem Ende jeweils schneidenförmig ausgebildet sein. Diese Schneiden können bei der Montage in das Halterungselement eindringen und einen formschlüssigen Verbund oder zumindest eine Verbesserung des reibschlüssigen Verbunds zwischen der Trägeraufnahme und dem Halterungselement fördern.

Die Flanken können weiterhin die Schwenkachse für die Hebeleinrichtung aufnehmen.

Die Schwenkachse der Hebeleinrichtung kann wirkungsmäßig zwischen den Enden der Hebeleinrichtung angeordnet sein. Dadurch wird erreicht, dass die an dem einen Ende wirkende Druckkraft eine entsprechende Klemmbewegung an dem anderen Ende der Hebeleinrichtung bewirkt.

Sinnvollerweise kann die Schwenkachse senkrecht zu der Hauptrichtung der Trägeraufnahme angeordnet sein, also senkrecht zu der Hauptrichtung stehen. Damit ist es möglich, dass sich die Hebeleinrichtung parallel zu der Trägeraufnahme in der Hauptrichtung erstreckt, sodass die Hebeleinrichtung eine ausreichende Länge erreicht, um die erforderlichen Hebelkräfte zu erzielen.

Die Schwenkachse kann durch einen Bolzen gebildet sein, wobei die Trägeraufnahme und die Hebeleinrichtung über den Bolzen miteinander gekoppelt sind. Dies ermöglicht einen einfachen und robusten Aufbau der Befestigungsvorrichtung.

Ebenso ist es möglich, zur Ausgestaltung der Schwenkachse die Hebeleinrichtung und die Trägeraufnahme durch Ausformungen bzw. Ausprägungen in der Hebeleinrichtung oder der Trägeraufnahme miteinander schwenkbar zu koppeln. So können an der Trägeraufnahme Laschen oder Warzen ausgeformt sein, die in entsprechende Öffnungen in der Hebeleinrichtung eingreifen und auf diese Weise die Schwenkachse realisieren. Bei dieser Variante kann auf zusätzliche Bauteile in Form des Bolzens und der Bolzensicherung verzichtet werden.

Bei den beschriebenen Ausführungsformen kann die Schwenkachse der Hebeleinrichtung ortsfest in Bezug auf die Trägeraufnahme ausgebildet sein. Alternativ ist es möglich, die Schwenkachse auch verlagerbar, z.B. linear oder auf einem bogenförmigen Weg verschiebbar in Bezug auf die Trägeraufnahme vorzusehen. Dies ist zum Beispiel durch eine Kombination eines als Schwenkachse dienenden Bolzens mit einer den Bolzen führenden Längsnut möglich.

Bei einer Variante kann das Druckelement in die Hebeleinrichtung integriert sein. So kann das Druckelement fester bzw. integraler Bestandteil der Hebeleinrichtung sein, was die Fertigung der Befestigungsvorrichtung vereinfacht, weil dann die Hebeleinrichtung und das Druckelement durch ein Bauteil realisiert werden können.

Bei einer anderen Variante ist das Druckelement relativ zu der Hebeleinrichtung verschwenkbar gelagert. Die Verschwenkbarkeit ermöglicht es, dass sich das Druckelement relativ zu der Hebeleinrichtung und damit auch relativ zu der Trägeraufnahme bzw. dem in die Trägeraufnahme eingelegten Querträger ausrichten kann. Das ist vorteilhaft, weil die Hebeleinrichtung beim Verschwenken zwangsläufig ihre Relativstellung bezüglich der Trägeraufnahme und dem einzulegenden Querträger verändert, sodass unterschiedliche Winkelstellungen eingenommen werden können. Diese unterschiedlichen Winkelstellungen können durch die Verschwenkbarkeit des Druckelements ausgeglichen werden, sodass das Druckelement immer in der gewünschten Weise, insbesondere immer mit der gewünschten Flächigkeit auf die Trägeraufnahme oder den Querträger einwirkt.

Die Schwenkachse zum Verschwenken des Druckelements relativ zu der Hebeleinrichtung kann sich parallel zu der Schwenkachse zum Verschwenken der Hebeleinrichtung relativ zu der Trägeraufnahme erstrecken.

Bei einer Variante kann sich die Schwenkachse des Druckelements auch senkrecht zu der Verschwenkachse der Hebeleinrichtung und senkrecht zu der Hauptrichtung der Trägeraufnahme erstrecken.

Das Druckelement kann eine Andrückfläche mit einer erhöhten Rauhigkeit aufweisen, wobei das Druckelement über einen Schwenkbolzen mit der Hebeleinrichtung verschwenkbar gekoppelt sein kann.

Die Spannkraft-Erzeugungseinrichtung kann in besonders einfacher Weise wenigstens einen Schraubenbolzen und wenigstens ein an der Hebeleinrichtung vorgesehenes Schraubengewinde aufweisen. Dabei kann der Schraubenbolzen in dem Schraubengewinde verdrehbar sein, sodass er sich bei einer Drehung relativ zu der Hebeleinrichtung axial verlagert. Auf diese Weise kann die Spannkraft-Erzeugungseinrichtung in sehr einfacher Art aufgebaut werden. Durch einfaches Drehen des Schraubenbolzens wird dieser axial verlagert und kann so die Druckkraft erzeugen, die auf das eine Ende der Hebeleinrichtung einwirken soll, um am anderen Ende der Hebeleinrichtung die erforderliche Druck- bzw. Spannkraft zu bewirken, mit der dort über das Druckelement der Querträger an dem Halterungselement festgeklemmt wird. Selbstverständlich können auch zwei oder mehr Schraubenbolzen in entsprechenden Schraubengewinden vorgesehen sein, um die Spannkraft-Erzeugungseinrichtung zu bilden.

Für die Ausgestaltung der Spannkraft-Erzeugungseinrichtung sind darüber hinaus auch andere Ausführungsformen denkbar, z.B. mit einem Exzenter, einem Kniehebel, Keilelementen oder mit schiefen Ebenen.

An dem stirnseitigen Ende des Schraubenbolzens kann eine Druckeinrichtung angeordnet sein, die die von dem Schraubenbolzen erzeugte Spannkraft gleichmäßig auf die Trägeraufnahme bzw. den in die Trägeraufnahme eingelegten Querträger verteilt. Somit kann eine überhöhte lokale Flächenpressung vermieden werden.

Die Befestigungsvorrichtung ermöglicht einen kompakten und robusten Aufbau. Für den Monteur eines entsprechenden Rangierantriebs ist es sehr einfach möglich, mit Hilfe der Befestigungsvorrichtung den Querträger auch ohne Mithilfe einer zweiten Monteurkraft anzubringen. An den beiden Enden des Querträgers wiederum lässt sich dann der Rangierantrieb in bekannter Weise befestigen.

Diese und weitere Vorteile und Merkmale der Erfindung werden nachfolgend anhand von Beispielen unter Zuhilfenahme der begleitenden Figuren näher erläutert. Es zeigen:
- **Fig. 1**: in Perspektivansicht eine Befestigungsvorrichtung;
- **Fig. 2**: die Befestigungsvorrichtung in Vorderansicht;
- **Fig. 3**: die Befestigungsvorrichtung in einer perspektivischen Hinteransicht;
- **Fig. 4**: eine andere Ausführungsform der Befestigungsvorrichtung in Schnittdarstellung;
- **Fig. 5**: eine weitere Ausführungsform der Befestigungsvorrichtung in Schnittdarstellung;
- **Fig. 6**: eine Variante eines an einer Hebeleinrichtung gehaltenen Druckelements;
- **Fig. 7**: eine Untersicht von einer anderen Ausführungsform des Hebels; und
- **Fig. 8**: ein zu dem Hebel von Fig. 7 zugehöriges Druckelement

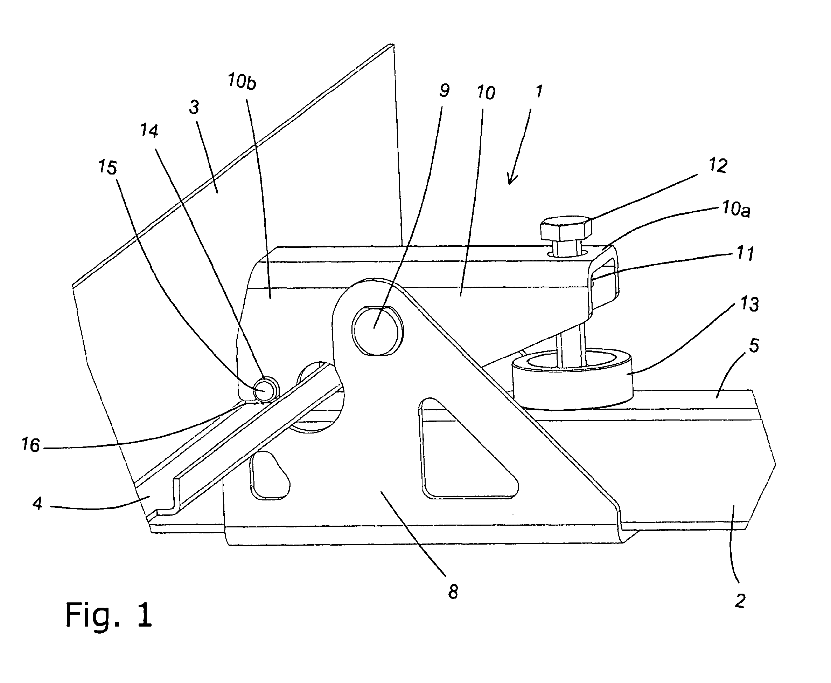

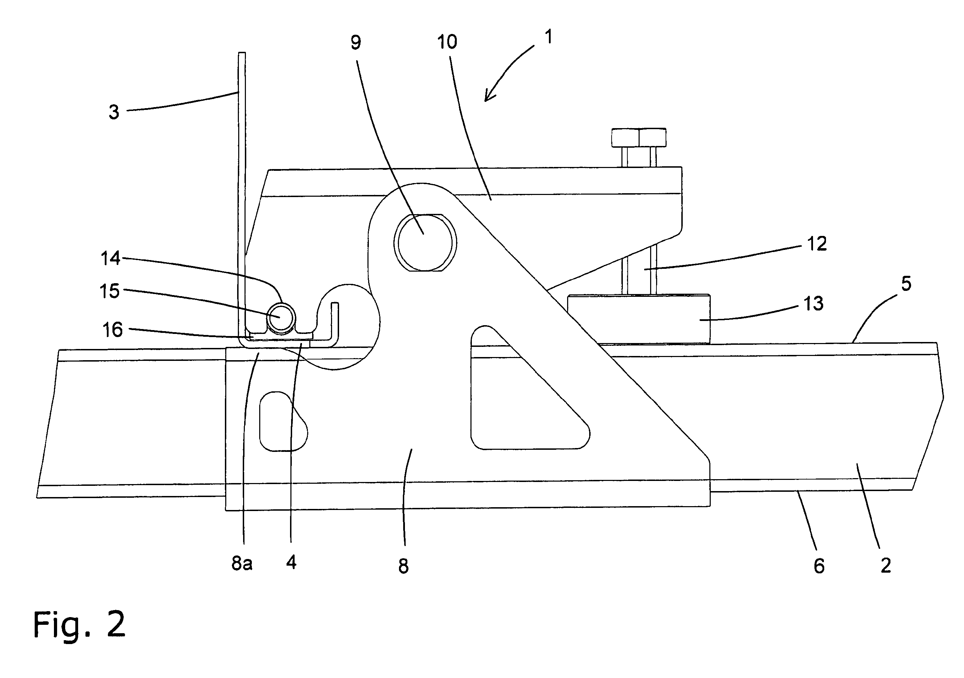

Die Fig. 1 bis 3 zeigen eine erfindungsgemäße Befestigungsvorrichtung 1 in verschiedenen Ansichten, die nachfolgend erläutert wird.

Die Befestigungsvorrichtung 1 dient zum Befestigen eines Querträgers 2 an einem Längsträger 3, der Bestandteil eines Chassis eines Wohnwagens oder eines anderen Anhängers ist. Das Chassis weist üblicherweise einen Grundrahmen auf, der durch mehrere zusammengefügte bzw. geschweißte Träger - zu denen auch der Längsträger 3 gehört - gebildet wird.

Der als Halterungselement dienende Längsträger 3 kann kasten- bzw. U-profilförmig sein, wobei in den Fig. 1 bis 3 nur die untere Hälfte des Längsträgers 3 dargestellt ist. Für den hier beschriebenen Anwendungsfall ist vor allem die sinnvollerweise horizontale Montagefläche 4 an dem Längsträger 3 von Bedeutung, an der die Befestigungsvorrichtung 1 mit dem Querträger 2 angebracht werden soll, wie Fig. 1 zeigt.

Der Querträger 2 ist in dem gezeigten Beispiel ein Vierkantrohr aus Stahl. Er kann aber auch durch ein anderes geeignetes Profilteil gebildet werden, wobei es für eine robuste Montage zweckmäßig ist, wenn insbesondere eine obere Fläche 5 und eine untere Fläche 6 des Querträgers 2 vorgesehen sind, an denen die noch zu erläuternden Druck- bzw. Montageelemente der Befestigungsvorrichtung 1 angreifen können.

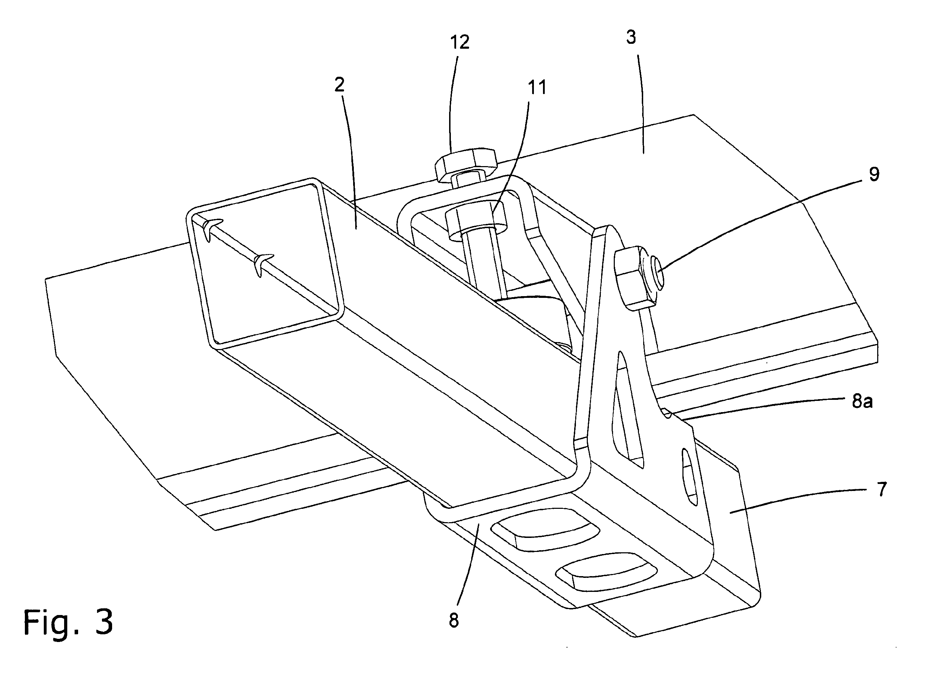

An einem Ende 7 des Querträgers 2 (Fig. 3) kann die Halterung eines Rangierantriebs aufgeschoben werden, wie er zum Beispiel aus der EP 1 714 858 A1 bekannt ist. Bei der Montage eines derartigen Rangierantriebs soll sinnvollerweise zunächst der Querträger 2 mit Hilfe der Befestigungsvorrichtung 1 an dem Längsträger 3 befestigt werden, bevor der Rangierantrieb mit seiner Halterung auf das Ende 7 des Querträgers 2 aufgeschoben wird.

Der Querträger 2 kann eine ausreichende Länge aufweisen, um sich vollständig entlang der Unterseite des Anhängers in Querrichtung zu erstrecken, sodass auf beiden Seiten des Querträgers 2, das heißt an beiden Enden 7 jeweils ein Rangierantrieb montiert werden kann.

Die Befestigungsvorrichtung 1 weist eine Trägeraufnahme 8 in Form eines U-Bügels auf. Die Flankenenden der Trägeraufnahme 8 sind durch einen Bolzen 9 durchdrungen, der als Schwenkachse für einen Hebel 10 dient. Der Hebel 10 erfüllt die Funktion einer Kralle, mit der sich die Befestigungsvorrichtung 1 an dem Längsträger 3 "festkrallen" soll.

Die vorderen, im Bereich der Montagefläche 4 vorgesehenen Abschnitte der Flankenenden der Trägeraufnahme 8 (Schenkelenden des U-Profils) weisen jeweils eine sich entlang der Hauptrichtung erstreckende Schneide 8a auf. Die Schneiden 8a werden im zusammengebauten Zustand in die Unterseite der Montagefläche 4 eingepresst und ermöglichen so eine formschlüssige Verbindung zwischen der Trägeraufnahme 8 und der Montagefläche 4 bzw. dem Längsträger 3.

An dem von dem Längsträger 3 entfernten Ende 10a des Hebels 10 ist eine Bohrung mit einer Schraubenmutter 11 vorgesehen, in die ein Schraubenbolzen 12 eingeschraubt ist. Das stirnseitige Ende des Schraubenbolzens 12 wirkt auf ein Druckstück 13, das bei bestimmungsgemäßen Gebrauch auf die obere Fläche 5 des Querträgers 2 wirkt. Die Schraubenmutter 11, der Schraubenbolzen 12 und das Druckstück 13 bilden zusammen eine Spannkraft-Erzeugungseinrichtung. Insbesondere ist ersichtlich, dass bei einem Einschrauben des Schraubenbolzens 12 in die Schraubenmutter 11 eine axiale Verlagerung des Schraubenbolzens 12 bewirkt wird, sodass der Schraubenbolzen 12 das Druckstück 13 gegen die obere Fläche 5 des Querträgers 2 drückt. Über die Schraubenmutter 11 wird somit der Hebel 10 an diesem Ende 10a nach oben verlagert, sodass sich sein gegenüberliegendes Ende 10b nach unten verlagert.

An diesem anderen Ende 10b ist eine Ausnehmung 14 in dem im gezeigten Beispiel U-profilförmigen Hebel 10 ausgebildet, in den ein Schwenkbolzen 15 eingelegt ist.

Die Ausnehmung 14 kann auch als Durchgangsbohrung ausgebildet sein, durch die der Schwenkbolzen 15 durchgesteckt ist.

Im Inneren der Flanken des U-profilförmigen Hebels 10 ist auf dem Schwenkbolzen 15 ein als Druckeinrichtung bzw. "Gripper" dienendes Druckelement 16 vorgesehen. Das Druckelement 16 weist eine Druckfläche auf, die gegen die Montagefläche 4 des Längsträgers 3 pressen kann, wenn die Befestigungsvorrichtung 1 an dem Längsträger 3 befestigt ist, wie in den Fig. 1 bis 3 gezeigt. Für die Ausgestaltung des Druckelements 16 sind auch weitere Varianten möglich.

Um einen ausreichenden Halt der Befestigungsvorrichtung 1 an dem Längsträger 3 zu erreichen, kann die Andrückfläche des Druckelements 16 aufgeraut und zum Beispiel mit kleinen Zähnen versehen sein. Durch die erhöhte Rauhigkeit - gegebenenfalls durch kleine zahnähnliche Spitzen - wird eine Art Mikroformschluss erreicht, der einen besonders innigen Verbund zwischen der Befestigungsvorrichtung 1 und dem Längsträger 3 fördert.

Wenn - wie oben bereits beschrieben - der Schraubenbolzen 12 in die Schraubenmutter 11 eingeschraubt wird und sich somit über das Druckstück 13 an der oberen Fläche des Querträgers 2 abstützt, verschwenkt der Hebel 10 derart, dass sich das gegenüberliegende andere Ende 10b zusammen mit dem dort vorgesehenen Druckelement 16 absenkt. Das Druckelement 16 wird so gegen die Montagefläche 4 des Längsträgers 3 gepresst. Die Montagefläche 4 kann wiederum an die obere Fläche 5 des Querträgers 2 gepresst werden, sodass auch zwischen dem Längsträger 3 und dem Querträger 2 ein fester Zusammenhalt erreicht wird.

Bei einer Variante ist es möglich, dass sich der Querträger 2 und die Montagefläche 4 nicht oder nur leicht berühren. Hier verläuft der Kraftfluss über das Druckelement 16, die Montagefläche 4 und über die Schneiden 8a in die Trägeraufnahme 8. Der Querträger 2 wird hingegen in erster Linie durch den Schraubenbolzen 12 und das Druckstück 13 in der Trägeraufnahme 8 fest geklemmt. Ein erheblicher Teil des Kraftflusses wird somit von dem Querträger 2 über die Trägeraufnahme 8 zu dem Längsträger 3 geführt, nicht direkt von dem Querträger 2 zu dem Längsträger 3.

Nach ausreichendem Festziehen des Schraubenbolzens 12 wird der Querträger 2 mit Hilfe der Befestigungsvorrichtung 1 zuverlässig an dem Längsträger 3 gehalten. Die konstruktionsbedingt elastische Verspannung über die Befestigungsvorrichtung 1 bewirkt darüber hinaus, dass auch die Schraubenverbindung 11, 12 dauerhaltbar ist, sodass auch bei einem längeren Fahrbetrieb des Anhängers die sichere Befestigung des Querträgers 2 an dem Längsträger 3 aufrecht erhalten werden kann.

Die Trägeraufnahme 8 dient somit zum Halten des Querträgers 2, wodurch bereits die Montage erleichtert wird. Der keilartige Hebel dient dazu, die Befestigungsvorrichtung 1 mit dem Querträger 2 an dem Längsträger 3 des Anhängers festzuhalten.

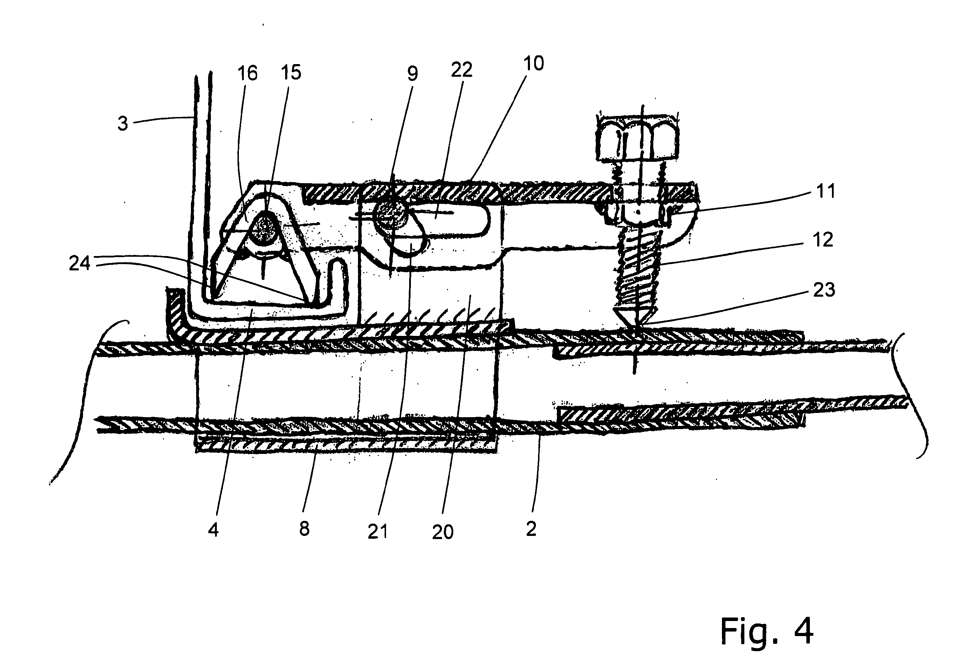

Fig. 4 zeigt eine andere Ausführungsform der Befestigungsvorrichtung in schematischer Darstellung. Funktional gleiche Bauelemente wie bei der Ausführungsform der Fig. 1 bis 3 sind mit gleichen Bezugszeichen gekennzeichnet.

Die Trägeraufnahme 8 ist bei dieser Variante rohrförmig ausgebildet, sodass der Querträger 2 in die Trägeraufnahme 8 seitlich eingeschoben werden kann. Auf der Oberseite der Trägeraufnahme 8 sind seitlich zwei Stegbleche 20 angeschweißt, von denen in Fig. 4 jedoch nur eins zu sehen ist. Die Stegbleche 20 tragen den als Schwenkachse dienenden Bolzen 9, an dem der Hebel 10 gelagert ist. Der Bolzen 9 kann in einer Schrägnut 21 aufgenommen sein, sodass eine gewisse Höhenanpassung des Hebels 10 möglich ist, um die Befestigungsvorrichtung 1 an unterschiedliche Umgebungsbedingungen, insbesondere an unterschiedliche Gestaltungen des Längsträgers 3 anpassen zu können.

Der Hebel 10 ist - wie beim obigen Beispiel - U-förmig ausgebildet, wobei in den Seitenflanken des U-Profils jeweils eine Längsnut 22 ausgebildet ist, durch die der Bolzen 9 durchgesteckt wird. Dadurch lässt sich der Hebel 10 in seiner Längsrichtung linear verschieben, um auch auf diese Weise eine Anpassung an unterschiedliche Ausführungen des Längsträgers 3 zu ermöglichen.

Die Spannkraft-Erzeugungseinrichtung mit dem Schraubenbolzen 12 und der Schraubenmutter 11 ist in ähnlicher Weise wie beim obigen Beispiel ausgeführt. Anstelle des dort gezeigten Druckstücks 13 ist bei der Variante von Fig. 4 der Schrauben an seinem stirnseitigen Ende mit einer konischen Form versehen, sodass eine gewisse Spitze 23 entsteht, die in dem Querträger 2 eindringen kann, um einen Formschluss zu bewirken.

Das Druckelement 16 ist an dem Schwenkbolzen 15 verschwenkbar gehalten. Es ist in dem gezeigten Beispiel dachförmig ausgebildet und weist statt der in obigem Beispiel gezeigten Druckfläche zwei Druckkanten 24 auf. Die Druckkanten wirken auf die Montagefläche 4 des Längsträgers 3 und erzielen durch ihren linienförmigen Verlauf eine sehr hohe Flächenpressung. Die hohe Flächenpressung bewirkt eine - wenn auch geringfügige - plastische Verformung, sodass in gewisser Weise ein formschlüssiger Verbund zwischen dem Druckelement 16 und dem Längsträger 3 erreicht wird. Dies führt zu einem besonders festen Verbund zwischen den Bauelementen.

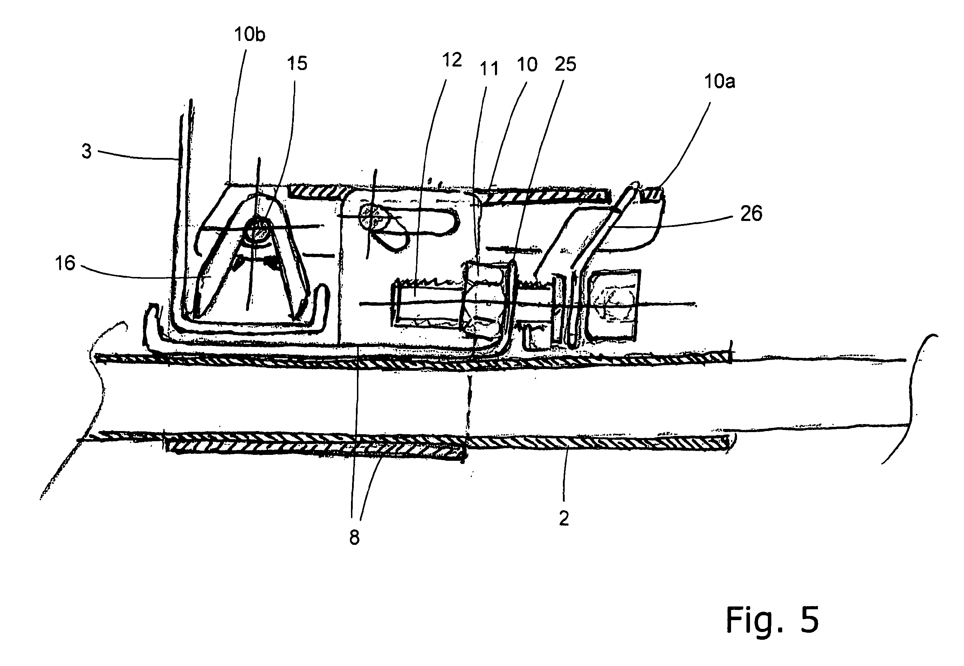

Fig. 5 zeigt eine Variante zu der Ausführungsform von Fig. 4. Dabei ist an dem einen Ende 10a des Hebels 10 eine Spannkraft-Erzeugungseinrichtung vorgesehen, die die Spannkraft nicht durch Abstützen des Schraubenbolzens 12 gegen den Querträger 2 erzielt, sondern innerhalb der Befestigungsvorrichtung 1 allein.

Zu diesem Zweck ist die Schraubenmutter 11 an einer Seitenwange 25 der Trägeraufnahme 8 befestigt, zum Beispiel angeschweißt. Der Schraubenbolzen 12 wirkt über eine zum Beispiel schräg nach oben geführte Lasche 26 auf das Ende 10a des Hebels 10 und bewirkt so bei einem Einschrauben des Schraubenbolzens 12 in die Schraubenmutter 11, dass sich das Ende 10a des Hebels 10 nach oben und das gegenüberliegende Ende 10b nach unten verlagert, sodass das Druckelement 16 gegen den Längsträger 3 gepresst wird.

Für die Spannkraft-Erzeugungseinrichtung sind selbstverständlich weitere Varianten denkbar, um eine ausreichende Spannkraft zu bewirken, mit der der Querträger 2 an dem Längsträger 3 gehalten werden kann.

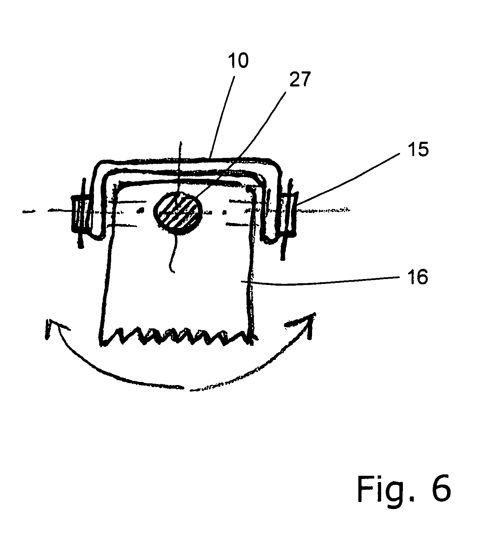

Fig. 6 zeigt eine Variante für die Befestigung des Druckelements 16 an dem Hebel 10.

Wie oben bereits erläutert ist das Druckelement 16 über den Schwenkbolzen 15 an dem Hebel 16 gehalten. Zusätzlich ist bei der Variante von Fig. 6 ein Querbolzen 27 vorgesehen, der sich senkrecht zu dem Schwenkbolzen 15 erstreckt. Dies ermöglicht ein Verschwenken des Druckelements 16 zusätzlich rechtwinklig zu dem Schwenkbolzen 15, wie durch die Pfeile angedeutet. Das Druckelement 16 ist somit um zwei Achsen (entsprechend dem Schwenkbolzen 15 und dem senkecht dazu stehenden Querbolzen 27) in alle Raumrichtungen verschwenkbar, um die Stellung des Druckelements 16 an die jeweiligen Gegebenheiten anzupassen und insbesondere die Druckkante 16a voll auf die Montagefläche 4 des Längsträgers aufsetzen zu können.

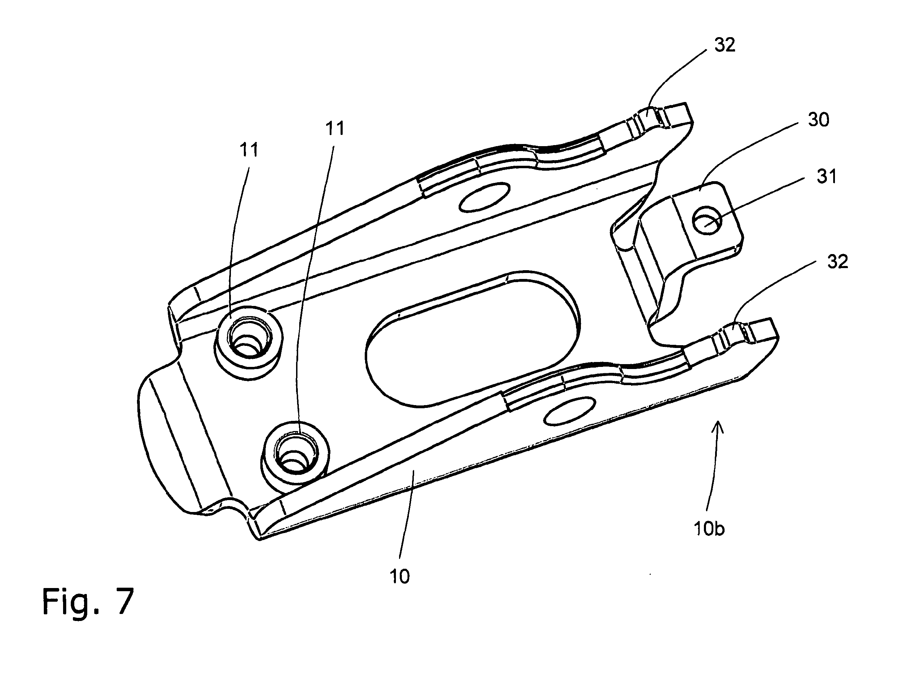

Fig. 7 zeigt eine Variante des Hebels 10 in Untersicht.

Anstelle der in den Fig. 1 bis 3 gezeigten Ausführungsform weist der Hebel 10 jetzt zwei Schraubengewinde in Form der beiden Schraubenmuttern 11 auf. Mit Hilfe von zugehörigen, in der Fig. nicht gezeigten Schraubenbolzen kann somit eine höhere Spannkraft erzeugt werden.

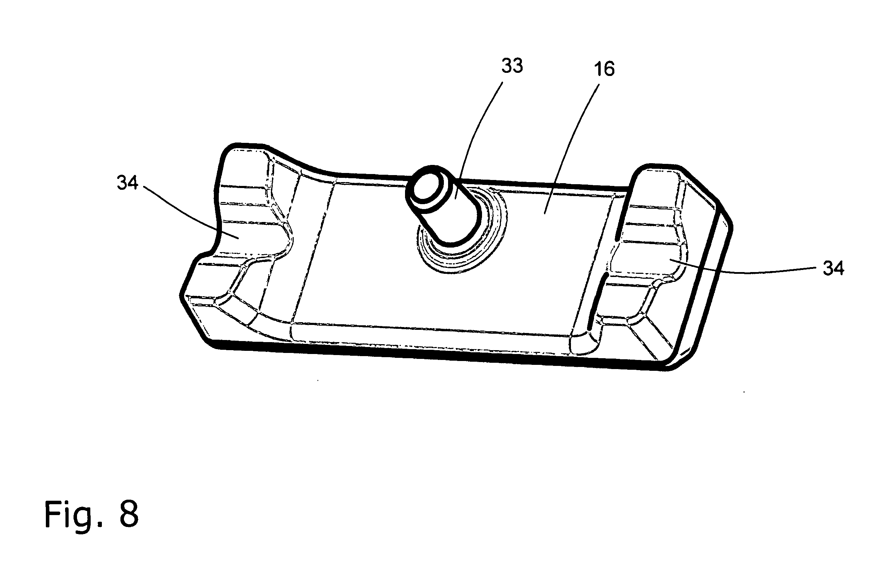

Am gegenüberliegenden Ende 10b ist eine Lasche 30 ausgebildet, die eine Bohrung 31 aufweist. In die Bohrung 31 kann ein Bolzen eines Druckelements eingesteckt werden, das später noch anhand von Fig. 8 beschrieben wird.

Weiterhin sind an den Seitenflanken des U-förmig gestalteten Hebels 10 an dem Ende 10b zwei Höcker 32 ausgebildet, die als Lager für das Druckelement von Fig. 8 dienen.

Fig. 8 zeigt ein Druckelement 16 als Variante zu dem Druckelement 16 der Fig. 1 bis 3.

Bei dem Druckelement 16 ist ein Befestigungs- bzw. Steckbolzen 33 vorgesehen, der sich senkrecht zu der eigentlichen, in Fig. 8 abgewandten Druckfläche des Druckelements 16 erstreckt und in die Bohrung 31 eingeführt werden kann. Dort wird der Steckbolzen 33 durch eine Stoppscheibe oder einen Sicherungsring gegen Herausfallen gesichert.

In dem Druckelement 16 sind zwei im Wesentlichen V-förmige Ausnehmungen 34 ausgebildet, die mit den Höckern 32 des Hebels 10 korrespondieren. Wenn das Druckelement 16 an dem Hebel 10 montiert ist, dienen die Ausnehmungen 34 als Lager für die Höcker 32, so dass das Druckelement 16 in gewissen, durch die Toleranzen von Bohrung 31 und Steckbolzen 33 vorgegebenen Grenzen relativ zu dem Hebel 10 verschwenkbar ist, um die Winkelstellungen des Hebels 10 auszugleichen. Insoweit dient der Steckbolzen 33 auch als Schwenkachse.

Die erfindungsgemäße Befestigungsvorrichtung ermöglicht eine gegenüber dem Stand der Technik stark vereinfachte Klemmtechnik, bei der zum Beispiel nur eine Schraube festgezogen werden muss, um die gesamte Befestigungsvorrichtung 1 mit dem Querträger 2 an dem Längsträger 3 anzubringen.

Die Klemmflächen, an denen unterschiedliche Bauelemente miteinander verbunden werden sollen, insbesondere die Druckfläche des Druckelements 16 können gehärtet und zum Beispiel gezahnt sein. Die Trägeraufnahme 8 und der Hebel 10 können als Stahlblech oder Stahlgusskonstruktion ausgeführt werden.

Die Spannkraft-Erzeugungseinrichtung kann einen Schraubenbolzen aufweisen, der sowohl senkrecht als auch waagrecht eingeschraubt werden kann. Die waagrechte Einschraubung des Schraubenbolzens (wie in Fig. 5 gezeigt) kann besonders vorteilhaft sein, weil sie eine vereinfachte Montage ermöglicht.

## Patentansprüche

1. Befestigungsvorrichtung (1) zum Befestigen von wenigstens einem Querträger (2) an einem Halterungselement (3), mit
- einer Trägeraufnahme (8) zum Aufnehmen eines Querträgers (2); und mit
- einer relativ zu der Trägeraufnahme (8) um eine Schwenkachse (9) verschwenkbar gelagerten Hebeleinrichtung (10); wobei
- an einem Ende (10a) der Hebeleinrichtung (10) eine Spannkraft-Erzeugungseinrichtung (11, 12) vorgesehen ist, die so angeordnet ist, dass sie mit dem in der Trägeraufnahme aufgenommenen Querträger zusammenwirken kann;
- an dem gegenüberliegenden anderen Ende (10b) der Hebeleinrichtung (10) ein Druckelement (16) vorgesehen ist; wobei
- durch die Spannkraft-Erzeugungseinrichtung (11, 12) eine Kraft zwischen dem zugehörigen Ende (10a) der Hebeleinrichtung (10) und der Trägeraufnahme (8) erzeugbar ist, derart, dass sich dieses Ende (10a) von der Trägeraufnahme (8) wegbewegt, während sich gleichzeitig das gegenüberliegende andere Ende (10b) der Hebeleinrichtung (10) mit dem Druckelement (16) zu der Trägeraufnahme (8) hinbewegtund wobei
- die Hebeleinrichtung (10) im befestigten Zustand der Befestigungsvorrichtung (1) über die Spannkrafterzeugungseinrichtung (11, 12) den Querträger (2) verklemmt und gleichzeitig über das Druckelement (16) das Halterungselement (3) mit der Trägeraufnahme (8) verklemmt.

2. Befestigungsvorrichtung nach Anspruch 1, **dadurch gekennzeichnet, dass** die Schwenkachse (9) wirkungsmässig zwischen den Enden (10a, 10b) der Hebeleinrichtung (10) angeordnet ist.

3. Befestigungsvorrichtung nach einem der vorangehenden Ansprüche, **dadurch gekennzeichnet, dass**
- sich ein zu befestigender Querträger (2) beim Befestigen in eine Hauptrichtung der Trägeraufnahme (8) erstreckt; und dass
- die Schwenkachse (9) senkrecht zu der Hauptrichtung der Trägeraufnahme (8) angeordnet ist.

4. Befestigungsvorrichtung nach einem der vorangehenden Ansprüche, **dadurch gekennzeichnet, dass** sich die Hebeleinrichtung (10) parallel zu der Trägeraufnahme (8) in der Hauptrichtung erstreckt.

5. Befestigungsvorrichtung nach einem der vorangehenden Ansprüche, **dadurch gekennzeichnet, dass**
- die Schwenkachse (9) durch einen Bolzen gebildet ist; und dass
- die Trägeraufnahme (8) und die Hebeleinrichtung (10) über den Bolzen miteinander gekoppelt sind.

6. Befestigungsvorrichtung nach einem der vorangehenden Ansprüche, **dadurch gekennzeichnet, dass** das Druckelement (16) in die Hebeleinrichtung (10) integriert ist.

7. Befestigungsvorrichtung nach einem der vorangehenden Ansprüche, **dadurch gekennzeichnet, dass** das Druckelement (16) relativ zu der Hebeleinrichtung (10) verschwenkbar gelagert ist.

8. Befestigungsvorrichtung nach einem der vorangehenden Ansprüche, **dadurch gekennzeichnet, dass**
- das Druckelement (16) eine Andrückfläche mit einer erhöhten Rauhigkeit aufweist; und/oder dass
- das Druckelement (16) über einen Schwenkbolzen (15) mit der Hebeleinrichtung (10) verschwenkbar gekoppelt ist.

9. Befestigungsvorrichtung nach einem der vorangehenden Ansprüche, **dadurch gekennzeichnet, dass**
- die Spannkraft-Erzeugungseinrichtung wenigstens einen Schraubenbolzen (12) und ein an der Hebeleinrichtung (10) vorgesehenes Schraubengewinde (11) aufweist; und dass
- der Schraubenbolzen (12) in dem Schraubengewinde (11) verdrehbar ist, so dass er sich bei seiner Drehung relativ zu der Hebeleinrichtung (10) axial verlagert.

10. Befestigungsvorrichtung nach Anspruch 9, **dadurch gekennzeichnet, dass** an dem stirnseitigen Ende des Schraubenbolzens (12) eine Druckeinrichtung (13) angeordnet ist.

11. Befestigungsvorrichtung nach Anspruch 10, **dadurch gekennzeichnet, dass** die Druckeinrichtung (13) gegen den Querträger (2) andrückbar ist.

## Claims

1. A fastening device (1) for fastening at least one cross member (2) to a support element (3), comprising
- a member seat (8) for receiving a cross member (2); and comprising
- a lever means (10) mounted for pivoting about a pivot spindle (9) in relation to the member seat (8);
- a tensioning force generating means (11, 12) being provided at one end (10a) of the lever means (10) and being arranged such that it can cooperate with the cross member received in the member seat;
- a pressure element (16) being provided at the opposite, other end (10b) of the lever means (10);
- the tensioning force generating means (11, 12) being adapted to generate a force between the associated end (10a) of the lever means (10) and the member seat (8) such that this end (10a) moves away from the member seat (8), while at the same time the opposite, other end (10b) of the lever means (10) along with the pressure element (16) moves towards the member seat (8); and
- in the fastened state of the fastening device (1), the lever means (10) clamping the cross member (2) by means of the tensioning force generating means (11, 12) and at the same time clamping the support element (3) with the member seat (8) by means of the pressure element (16).

2. The fastening device according to claim 1, **characterized in that** the pivot spindle (9) is operatively arranged between the ends (10a, 10b) of the lever means (10).

3. The fastening device according to either of the preceding claims, **characterized in that**
- a cross member (2) to be fastened extends in a principal direction of the member seat (8) during fastening; and **in that**
- the pivot spindle (9) is arranged perpendicularly to the principal direction of the member seat (8).

4. The fastening device according to any of the preceding claims, **characterized in that** the lever means (10) extends in the principal direction parallel to the member seat (8).

5. The fastening device according to any of the preceding claims, **characterized in that**
- the pivot spindle (9) is formed by a pin; and **in that**
- the member seat (8) and the lever means (10) are coupled to each other by means of the pin.

6. The fastening device according to any of the preceding claims, **characterized in that** the pressure element (16) is integrated in the lever means (10).

7. The fastening device according to any of the preceding claims, **characterized in that** the pressure element (16) is mounted for pivoting in relation to the lever means (10).

8. The fastening device according to any of the preceding claims, **characterized in that**
- the pressure element (16) includes a contact pressure surface with an increased roughness; and/or **in that**
- the pressure element (16) is pivotally coupled to the lever means (10) by means of a pivot pin (15).

9. The fastening device according to any of the preceding claims, **characterized in that**
- the tensioning force generating means includes at least one bolt (12) and a screw thread (11) provided on the lever means (10); and **in that**
- the bolt (12) is adapted to be rotated in the screw thread (11), so that when it is rotated, it is axially shifted in relation to the lever means (10).

10. The fastening device according to claim 9, **characterized in that** a pressure means (13) is arranged on the face side end of the bolt (12).

11. The fastening device according to claim 10, **characterized in that** the pressure means (13) is adapted to be pressed against the cross member (2).

## Revendications

1. Dispositif de fixation (1) pour la fixation d'au moins une traverse (2) sur un élément de retenue (3), comportant
- un logement de support (8) pour la réception d'une traverse (2) ; et comportant
- un moyen de levier (10) monté de manière à pouvoir pivoter autour d'un axe de pivotement (9) par rapport au logement de support (8) ;
- un moyen de génération de force de serrage (11, 12) étant prévu à une extrémité (10a) du moyen de levier (10), lequel est agencé de manière à pouvoir coopérer avec la traverse reçue dans le logement de support ;
- un élément de pression (16) étant prévu à l'autre extrémité opposée (10b) du moyen de levier (10),
- une force étant apte à être générée par le moyen de génération de force de serrage (11, 12) entre l'extrémité associée (10a) du moyen de levier (10) et le logement de support (8) de sorte que cette extrémité (10a) se déplace en éloignement du logement de support (8), tandis que l'autre extrémité opposée (10b) du moyen de levier (10) se déplace simultanément ensemble avec l'élément de pression (16) vers le logement de support (8), et
- le moyen de levier (10), à l'état fixé du dispositif de fixation (1), serrant la traverse (2) par l'intermédiaire du moyen de génération de force de serrage (11, 12) et serrant simultanément l'élément de retenue (3) avec le logement de support (8) par l'intermédiaire de l'élément de pression (16).

2. Dispositif de fixation selon la revendication 1, **caractérisé en ce que** l'axe de pivotement (9) est agencé de manière fonctionnelle entre les extrémités (10a, 10b) du moyen de levier (10).

3. Dispositif de fixation selon l'une des revendications précédentes, **caractérisé en ce que**
- une traverse (2) à fixer s'étend dans un sens principal du logement de support (8) lors de la fixation ; et **en ce que**
- l'axe de pivotement (9) est agencé perpendiculairement au sens principal du logement de support (8).

4. Dispositif de fixation selon l'une des revendications précédentes, **caractérisé en ce que** le moyen de levier (10) s'étend de manière parallèle au logement de support (8) dans le sens principal.

5. Dispositif de fixation selon l'une des revendications précédentes, **caractérisé en ce que**
- l'axe de pivotement (9) est réalisé par un boulon ; et **en ce que**
- le logement de support (8) et le moyen de levier (10) sont couplés l'un à l'autre par le boulon.

6. Dispositif de fixation selon l'une des revendications précédentes, **caractérisé en ce que** l'élément de pression (16) est intégré dans le moyen de levier (10).

7. Dispositif de fixation selon l'une des revendications précédentes, **caractérisé en ce que** l'élément de pression (16) est monté à pivotement par rapport au moyen de levier (10).

8. Dispositif de fixation selon l'une des revendications précédentes, **caractérisé en ce que**
- l'élément de pression (16) présente une surface d'appui avec une rugosité élevée ; et/ou **en ce que**
- l'élément de pression (16) est couplé à pivotement au moyen de levier (10) par un pivot (15).

9. Dispositif de fixation selon l'une des revendications précédentes, **caractérisé en ce que**
- le moyen de génération de force de serrage présente au moins un boulon fileté (12) et un filet de vis intérieur (11) prévu sur le moyen de levier (10) ; et **en ce que**
- le boulon fileté (12) est apte à être tourné dans le filet de vis intérieur (11) de manière à ce qu'il se déplace axialement par rapport au moyen de levier (10) lors de sa rotation.

10. Dispositif de fixation selon la revendication 9, **caractérisé en ce qu'**un moyen de pression (13) est agencé à l'extrémité côté face frontale du boulon fileté (12).

11. Dispositif de fixation selon la revendication 10, **caractérisé en ce que** le moyen de pression (13) est apte à être pressé contre la traverse (2).
